# EUROPÄISCHE PATENTANMELDUNG

(11) **EP 0 545 213 A2**
(43) Veröffentlichungstag der Anmeldung: **09.06.1993**
(21) Anmeldenummer: 92119944.4
(22) Anmeldetag: 24.11.1992
(51) Int. Cl.: G01T 1/29

(54) **Verfahren und Vorrichtung zur Messung der Radioaktivitätsverteilung auf einer flächigen Probe**

(30) Priorität: 29.11.1991 DE 4139368
(71) Anmelder: LABORATORIUM PROF. DR. RUDOLF BERTHOLD GmbH & Co. KG, D-75323 Bad Wildbad (DE)
(72) Erfinder: Berthold, Fritz, Dr., W-7530 Pforzheim (DE)
(74) Vertreter: Frank, Gerhard, Dipl.-Phys.

(57) **Zusammenfassung**

Ein Verfahren zur Messung der Radioaktivitätsverteilung auf einer flächigen Probe benutzt ein zweidimensional arbeitendes Meßsystem. Hierbei besteht die Gesamtmessung der Probe aus mehreren, in einer Auswerterichtung sukzessiv durchgeführte Teilmessungen (Scannen). Bei jeder Teilmessung wird eine streifenartige Teilfläche in der anderen Auswerterichtung gleichzeitig und ortsempfindlich ausgemessen.

Dieses Verfahren kombiniert die Prinzipien ortsabhängiger Messung, Kollimation und Scan-Technik in besonders vorteilhafter Weise, da durch die Definition der einzelnen Parameter eine optimale Anpassung an Art und Struktur der auszumessenden Proben möglich wird.

## Beschreibung

Die Erfindung betrifft zunächst ein Verfahren zur ortsempfindlichen Messung der Radioaktivitätsverteilung gemäß dem Oberbegriff des Patentanspruchs 1.

Ein derartiges Verfahren ist aus der EP 0112645 B1 bekannt. Die dort vorgesehene Vorrichtung zur Durchführung des gattungsgemäßen Verfahrens beinhaltet eine elektronische Auswerteeinheit mit Speichereinrichtung und eine Anzeigeeinrichtung für die gemessene Intensitätsverteilung Z der Strahlung, wobei zwischen dem Detektor und der Probe eine Blendenplatte mit einer Vielzahl von regelmässig angeordneten Blendenöffnungen vorgesehen ist.

Der dort vorgesehene Detektor soll aus einer Ionisationskammer gebildet sein. Zur Auswertung soll vorzugsweise eine Decodierschaltung vorgesehen sein, die eine Identifizierung desjenigen Kreuzungspunktes erlaubt, unterhalb dessen bzw. unterhalb der diesem zugeordneten Blendenöffnung Strahlung nachgewiesen wurde.

Ionisationskammern sind jedoch zum Nachweis schwach radioaktiver Strahlung nicht brauchbar (Journal of Chromatography Library-Volume 14, "Radiochromatography" Elsevier Scientific Publishing Company 1978), so daß die praktische Anwendung eines derartigen ortsempfindlich arbeitenden Meßsystems eingeschränkt ist.

Bei der gattungsbildenden Vorrichtung ist jeder Blendenöffnung ein Kreuzungspunkt von Zähldrähten in x- und y-Richtung in übereinanderliegenden Drahtebenen der Ionisationskammern zugeordnet, wo durch die oben schon erwähnte Decodierung der gewonnenen Information die Blendenöffnung und die Zählrate der dieser Blendenöffnung zugeordneten Teilfläche der Probe gewonnen bzw. gemessen werden kann. Die vorbekannte Vorrichtung arbeitet daher als m x n-Mehrfachzähler (entsprechend m x n Zähldraht-Kreuzungspunkten), der (abhängig von der Form der Blendenöffnungen) die auszumessende Probenfläche mäanderförmig abfährt und hierbei bei jeder Teilmessung jeweils m x n-Bildpunkte gewinnt (Fig. 1b der EP 0112645).

Die mit diesem Verfahrensprinzip (matrixartige Anordnung von Blendenöffnungen und mäanderartige Scan-Bewegung) erreichbare Ortsauflösung sowohl in x- als auch y-Richtung wird hierbei durch die Dimensionierung der Blendenöffnungen in den Koordinatenrichtungen erreicht. Benötigt man eine sehr hohe Ortsauflösung, wie beispielsweise bei 32-P-markierten DNS-Sequenzgels und Blots, bei denen Auflösungen in der Größenordnung von 0,3 mm als typische Werte erstrebenswert sind, so benötigt man hierfür eine sehr große Anzahl von Blendenöffnungen mit entsprechend aufwendiger Decodierschaltung und einer Mehrzahl von Auswertedrähten, oder eine entsprechend höhere Anzahl von Teilmessungen mit einer sehr langwierigen und konstruktiv aufwendigen Scan-Bewegung und daraus resultierender sehr langer Meßdauer.

Bei speziellen Anwendungen, beispielsweise der schon erwähnten Messung von DNS-Sequenzgels oder Blots, sind Messungen ausreichend, die nur in einer Richtung (eindimensional) ortsempfindlich sind. Für diesen Spezialfall schlägt die gattungsgemäße Vorrichtung die Verwendung von schlitzförmigen Blendenöffnungen vor, deren Breite (x-Richtung) etwa der Breite der auszumessenden Bänder eines DNS-Sequenzgels entspricht. Mit der dann noch erforderlichen eindimensionalen Scan-Bewegung sind dann beispielsweise Proben in Form von benachbarten Bändern gleichzeitig erfaßbar mit einer Scan-Bewegung in Richtung der Bänder (Spalte 12, Zeile 64 bis Spalte 13, Zeile 5 der EP 0122645 und deren Fig. 1a).

Die gleichzeitige Erfassung von in senkrecht zur Scan-Richtung benachbarten Bändern kann aber nicht mehr als ortsempfindliche Messung in dieser Richtung angesehen werden, denn eine hier bestenfalls fiktiv definierbare "Ortsauflösung" einer solchen Messung hat einen Wert schlechter als die Länge der Schlitze in x-Richtung, was zu einer groben Mittelung der Radioaktivitätsverteilung über den Schlitz führt.

Der Preis, der bei der gattungsgemäßen Vorrichtung für ein vereinfachtes, lineares Scannen gezahlt werden muß, ist daher notwendigerweise der Verlust der Ortsempfindlichkeit in der Richtung senkrecht zur Scan-Richtung, so daß bei dieser Betriebsart die gattungsgmäße Vorrichtung nicht mehr zur zweidimensional orstempfindlichen Messung eingesetzt werden kann. Dadurch gehen aber dann auch Detailstrukturen, wie beispielsweise bogenförmige Radioaktivitätsmuster, die z.B. bei DNS-Sequenzgelen auftreten, zwangsläufig verloren.

Außerdem ist eine solche Beschränkung auf eine eindimensionale Scan-Bewegung nur dann vertretbar, wenn der Schwerpunkt der auszumessenden Banden nicht in x-Richtung variiert. In der Praxis treten die genannten beiden Effekte (bogenförmige Radioaktivitätsmuster mit zeitlichem Versatz) jedoch recht häufig gemeinsam auf. In solchen Fällen könnte dann nicht einmal mehr eine sinnvolle Zuordnung der gemessenen Mittelwerte zu den jeweiligen Banden mehr erfolgen, und die Messung wäre unbrauchbar. Letztlich ist die durch den Einsatz der Schlitzblende auf eine eindimensional ortsempfindlich arbeitende Vorrichtung reduzierte (und damit nicht mehr gattungsgemäße) Vorrichtung daher nur in besonderen Ausnahmefällen (idealer Bandenverlauf) einsetzbar.

Eine andere bekannte Vorrichtung zur zweidimensionalen Messung von radioaktiver Strahlung sind Mehrdraht-Proportionalzählrohre, wie sie beispielsweise in der DE-OS 37 35 296 beschrieben sind. Ein derartiges ortsempfindlich arbeitendes Proportionalzählrohr weist drei parallele Drahtebenen auf, nämlich die Anodendrahtebene und zwei Ausleseebenen (letztere als Dₓ bzw. D_{y} bezeichnet). Eine Ausleseebene befindet sich in der Regel über der Anodenebene, die andere darunter.

Die Drähte der Ausleseebenen können die induzierten Impulse in Delay-Lines einkoppeln, nämlich eine für die x-Ebene und eine für die y-Ebene; der eingekoppelte Impuls läuft vom Ort der Einkoppelung auf beide Enden der Delay-Line zu; an den Enden befinden sich schnelle Verstärker und es wird jeweils die Zeitdifferenz zwischen dem Eintreffen der Impulse an beiden Enden gemessen. Durch eine zusätzliche konstante Verzögerung auf der einen Seite der Delay-Line wird erreicht, daß der zu analysierende Zeitbereich zwischen Null und der zweifachen Gesamtverzögerung der Delay-Line liegt. Dieser Zeitbereich kann durch einen Zeit-Digitalkonverter (TDC) direkt digitalisiert werden, oder er wird zunächst in einen Analogwert verwandelt und anschließend mit einem Impuls-Analog-Digitalkonverter (ADC) digitalisiert.

Mit einem derartigen, zweidimensionalen Proportionalzählrohr läßt sich eine Ortsauflösung von etwa 0,5 mm (bei senkrecht einfallender Strahlung als Idealzustand) realisieren, die durch verschiedene Nicht-Linearitäten und Verzerrungen im Elektronik-Bereich jedoch eingeschränkt werden kann, diese durch die Hardware gegebene untere Auflösungsgrenze kann auch als "innere Auflösung" bezeichnet werden. In der Praxis ergeben sich durch die angesprochene Nicht-Linearitäten und die in der Regel isotrope Emission der Strahlung aus der Probe Werte von etwa 1 bis 2 mm Ortsauflösung. Zur Erhöhung der Ortsempfindlichkeit sind Kollimatoren verschiedener Bauart bekannt, beispielsweise verwendet die DE-PS 3915613 eine Blendenplatte mit einer Vielzahl von Blendenbohrungen, mit deren Hilfe bei isotrop anfallender Strahlung eine Ortsauflösung im Bereich von etwa 1 mm erreicht werden kann. Eine Unterschreitung dieses Wertes ist im wesentlichen auch durch technologische Begrenzungen der Herstellbarkeit der Blendenbohrungsdurchmesser bedingt, bei einer Präparatplatte von 20 x 20 cm ergeben sich bei einem Bohrungsdurchmesser gemäß dem vorgenannten Patent von 0,5 mm bereits 80.000 Bohrungen in einer solchen Kollimatorplatte.

Die Situation ist daher die, daß die zweidimensional ortsempfindliche Messung flächiger Proben mit den bekannten, zweidimensional arbeitenden Proportionalzählrohren (auch unter Zuhilfenahme von Kollimatoren) nur mit begrenzter Ortsauflösung, mit der gattungsbildenden Vorrichtung nur mit extremem apparativen und/oder zeitlichen Aufwand möglich ist.

Es ist daher Aufgabe der Erfindung, die gattungsgemäße Vorrichtung zur ortsempfindlichen Messung so zu konzipieren, daß eine Ortsauflösung erreichbar ist, mit der eine zufriedenstellende, zweidimensionale Darstellung der Radioaktivitätsverteilung von Proben, insbesondere von DNS-Sequenzgels und Blots, in kurzer Zeit ermöglicht wird.

Erfindungsgemäß wird diese Aufgabe durch den kennzeichnenden Teil des Patentanspruchs 1 gelöst.

Bei der erfindungsgemäßen Vorrichtung zur Durchführung dieses Verfahrens ist das Meßsystem derart ausgebildet, daß in x-Richtung der Probe die durch die Schlitze tretende Strahlung ortsempfindlich erfaßbar ist, und daß Einrichtungen vorgesehen sind, die die Probenplatte und das Meßsystem bei jedem Scan-Schritt höchstens um den Wert der Schlitzbreite relativ zueinander schrittweise oder kontinuierlich verschieben.

Ein Grundgedanke der Erfindung besteht also darin, die Prinzipien ortsabhängiger Messweg, von Kollimation und Scan-Technik in besonders vorteilhafter Weise zu kombinieren, wobei von entscheidender Bedeutung ist, daß der Kollimator durchgehende Schlitze aufweist, da hier die die Ortsauflösung in y-Richtung bestimmende Schlitzbreite ohne weiteres auf den erwünschten Auflösungsbereich von 0,2...0,3 mm reduziert werden kann, was bei Kollimatorplatten mit Blendenbohrungen, wie oben schon erwähnt, nicht mehr ohne weiteres möglich ist. Die Länge der Schlitze in x-Richtung wird zu einer "konventionellen" ortsempfindlichen Messung ausgenutzt, wodurch beispielsweise bei Verwendung eines zweidimensionalen ortsabhängigen Proportionalzählrohrs Auflösungen im Bereich von 1 bis 2 mm erreichbar sind, die in x-Richtung für eine ausreichende "Bildschärfe" bei der Darstellung der Radioaktivitätsverteilung ausreichend sind, insbesondere zur Erkennung von Radioaktivitätsverteilungen und Strukturen, die nicht genau parallel zu der Längsrichtung der Schlitze verlaufen. Die erfindungsgemäße Schlitzblende prägt daher dem verwendeten Meßsystem die spezifische Funktion eines Scanners in der Bewegungsrichtung auf (y-Richtung), wogegen in Schlitzrichtung die Funktion bzw. Ortsauflösung des verwendeten Meßsystems unbeeinflußt bleibt. Die Ortsauflösung in Scan-Richtung ist bestimmt durch die Schlitzbreite, die insbesondere auch unterhalb der "inneren Auflösung" des Zählrohrs liegen kann. Der erfindungsgemäße "Scan-Kollimator" ermöglicht durch diese Funktionszuweisung eine Anpassung der Vorrichtung an die spezifische Vorzugsrichtung des Präparats, in dem Sinne, daß eine wesentliche Erhöhung der Ortsempfindlichkeit in der Richtung erzielt wird, in der dies vom Präparat verlangt wird, ohne daß in der anderen Richtung auf die Ortsauflösung des jeweils verwendeten Meßsystems in dieser Richtung verzichtet werden muß.

Das erfindungsgemäße Verfahren kann mit verschieden ausgestalteten zweidimensional arbeitenden Meßsystemen durchgeführt werden, vorzugsweise mit einem zweidimensional arbeitenden ortsabhängigen Proportionalzählrohr, grundsätzlich könnte auch eine Anordnung von einer der Anzahl von Schlitzen entsprechenden Anzahl von eindimensionalen, in x-Richtung ortsabhängigen Zählrohren genügen, die beispielsweise gemäß DE-PS 30 02 950 aufgebaut sind.

Bei ersterer Lösung (zweidimensionales, ortsabhängiges Proportionalzählrohr) ermöglicht die erfindungsgemäße Lösung einige Vereinfachungen in der Konstruktion des Zählrohrs; extrem enge mechanische Toleranzen sind nicht mehr erforderlich, die Zahl von Anoden- und Auslesedrähten kann reduziert werden, die mechanischen und elektronischen Anforderungen an die der y-Ebene zugeordnete Delay-Line können reduziert werden und die entsprechend nachgeschaltete elektronische Verarbeitungslogik kann vereinfacht werden.

Grundsätzlich ist das Erfindungsprinzip auch so darstellbar, daß durch den Einsatz der Schlitzblende die Ortsabhängigkeit des zweidimensionalen Proportionalzählrohrs in y-Richtung nur dazu dient, n (Anzahl der Schlitze) eindimensionale Ortsverteilungen in x-Richtung gleichzeitig zu messen. Hierbei wird auch ein wesentlicher Unterschied zur gattungsgemäßen Vorrichtung deutlich, nämlich die Möglichkeit, eine Probenplatte mit extremer Genauigkeit in nur einem eindimensionalen "Scan-Durchlauf" zu erfassen, wozu die gattungsgemäße Vorrichtung ein x-y-Scanraster abfahren müßte, was erheblich aufwendiger und zeitintensiver wäre.

Vorteilhafte Ausgestaltungen der Erfindung sind weiteren Unteransprüchen entnehmbar, insbesondere Maßnahmen zur Sicherstellung der maximalen Empfindlichkeit durch möglichst vollständige Erfassung und elektronische Auswertung der durch einen Schlitz der Schlitzblende durchtretenden Strahlung sowie in weiterer Anpassung an die Strukturen der auszumessenden Präparate durch "maßgeschneiderte" Ortsauflösung im jeweiligen Auswertebereich des Präparates, nämlich eine Verbreiterung der Schlitze dort, wo geringere Ortsauflösung erforderlich ist und dadurch Erzielung einer höheren Zählausbeute. Auch hier ist eine optimale Anpassung der Auswertung hinsichtlich Ortsauflösung einerseits und Zählausbeute andererseits an die spezifischen Strukturen der auszumessenden Präparate erreichbar, jeder Richtung bzw. jedem Flächenabschnitt des auszumessenden Präparates kann von der Parallel-Schlitzblende genau diejenige Ortsempfindlichkeit zugeordnet werden, die zur Auswertung mit einer gewünschten Präzision und zum Aufbau eines Bildes der Radioaktivitätsverteilung erforderlich ist. Mehrere Ausführungsbeispiele zur erfindungsgemäßen Vorrichtung werden in Zeichnungen näher erläutert, es zeigen:
- Figur 1:: Eine schematische Explosionsdarstellung der erfindungsgemäßen Vorrichtung mit einem ortsempfindlichen, zweidimensionalen Proportionalzählrohr mit Dₓ-und D_{y}-Auswertung als Meßsystem,
- Figur 2:: einen Teil-Querschnitt durch die Vorrichtung gemäß Figur 1 in der y-z-Ebene,
- Figur 3:: eine schematische Explosionsdarstellung der erfindungsgemäßen Vorrichtung mit einem ortsempfindlichen, zweidimensionalen Proportionalzählrohr mit Dₓ- und Anodendrahtauslesung,
- Figur 4:: eine schematische Explosionsdarstellung der erfindungsgemäßen Vorrichtung mit einem ortsempfindlichen, eindimensionalen Proportionalzählrohr und Pad-Elektroden als Meßsystem,
- Figur 5:: ein schematischer Schnitt durch den Aufbau einer Vorrichtung zur Durchführung des erfindungsgemäßen Verfahrens gemäß Figur 3,
- Figur 6:: eine schematische Darstellung des Aufbaus eines Bildes der Radioaktivitätsverteilung auf der Probenplatte beim erfindungsgemäßen Verfahren bzw. mit der erfindungsgemäßen Vorrichtung, und
- Figur 7:: ein schematischer Schnitt durch das Gesamtgerät gemäß Figuren 1 und 2.

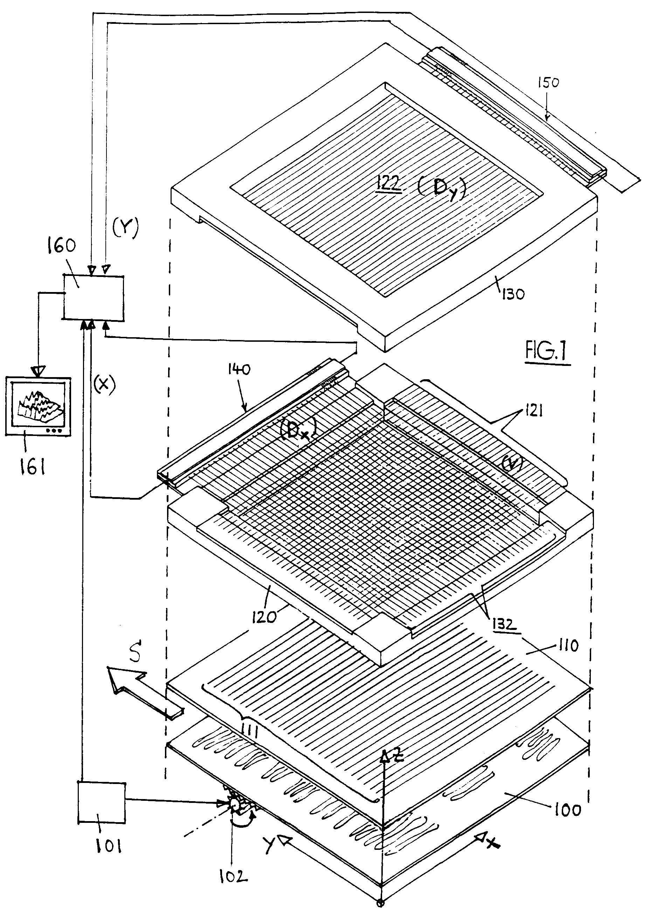

Figur 1 zeigt ein erstes Ausführungsbeispiel der erfindungsgemäßen Vorrichtung, bei dem ein ortsempfindliches, zweidimensionales Proportionalzählrohr verwendet wird, wie dies beispielsweise in der DE 37 35 296 A1 im einzelnen in seinem Aufbau und in seiner Funktion beschrieben ist; es sind daher in der Zeichnung nur die wesentlichen Komponenten dargestellt.

Das auszumessende Präparat ist in Form einer Probenplatte 100 dargestellt, die um einen bestimmten Scan-Weg in y-Richtung (Pfeil S) verschiebbar ist. Diese Verschiebbarkeit ist schematisch angedeutet durch eine Antriebseinheit 102, bestehend aus einem Zahnrad, das mit einer auf der Unterseite der Probenplatte 100 angebrachten Zahnung kämmt. Zur schrittweisen oder kontinuierlichen Aktivierung dieser Scan-Bewegung dient eine Antriebssteuereinheit 101, die ihrerseits die Information über die jeweilige Scan-Position der Probenplatte 100 an eine Auswerteeinheit 160 gibt, wo sie in Bezug zu den Meßdaten gesetzt wird. Oberhalb der Probenplatte 100 befindet sich eine Parallelschlitzblende 110, in der eine Anzahl von Schlitzen 111 in x-Richtung, also senkrecht zur Scan-Richtung S, eingebracht ist. Die Verschiebung der Probenplatte 100 unterhalb der Parallelschlitzblende 110 hat demnach zur Folge, daß das oberhalb der Parallelschlitzblende 110 befindliche Meßsystem jeweils schlitzförmige Ausschnitte der Probenplatte 100 bzw. der dort befindlichen Radioaktivitätsverteilung "sieht".

Bei dem in Figur 1 dargestellten Ausführungsbeispiel besteht das Meßsystem aus einem ersten Rahmen 120, in dem die in y-Richtung verlaufenden Drähte 132 der unteren Ausleseebene Dₓ befestigt sind. Diese Drähte 132 sind an eine erste Verzögerungsleitung 140 angekoppelt, und dienen zur Gewinnung der x-Ortsinformation, d.h. zur Messung der Radioaktivitätsverteilung entlang der Schlitze 111 der Parallelschlitzblende 110. Oberhalb und senkrecht zur unteren Ausleseebene Dₓ sind die Drähte 121 eines Anodendrahtgitters V gespannt.

Oberhalb dieses ersten Rahmens befindet sich ein zweiter Rahmen 130, der zur Aufnahme der zweiten, oberen Ausleseebene D_{y} dient, die aus parallel verlaufenden Kathodendrähten 122 besteht, die mit einer zweiten Verzögerungsleitung 150 gekoppelt sind. Hierdurch wird die y-Ortsinformation gewonnen, d.h. es wird die Nummer desjenigen Schlitzes 111 identifiziert, durch den ein Strahlungspartikel verlaufen und registriert worden ist.

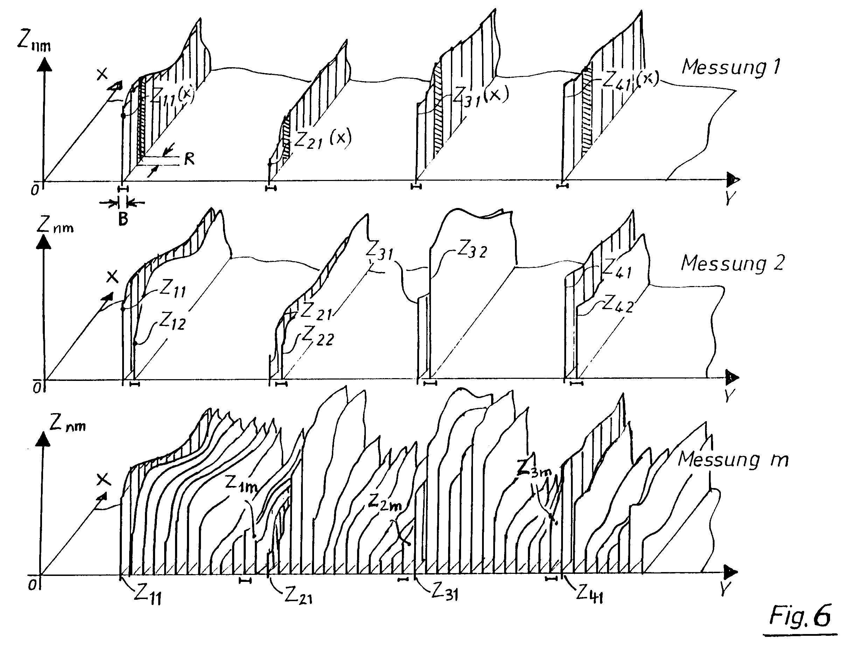

Die von den beiden Verzögerungsleitungen 140,50 gewonnenen Ortsinformationen (X) und (Y) werden in der Auswerteeinheit 160 nun derart verknüpft, daß aus ihnen die Nummer des Schlitzes und die X-Position des Strahlungsereignisses in diesem betreffenden Schlitz gewonnen wird; durch Verknüpfung dieser Ortsinformation mit der Information der Antriebssteuereinheit 101 (Position der Parallelschlitzblende 110) ist dann die Information insofern vollständig, als der Ort des Strahlungsereignisses auf der Probenplatte 100 identifiziert ist. Diese Information wird abgespeichert und bildet einen "Bildpunkt"; aus der Vielzahl solcher Informationen kann dann sukzessiv beispielsweise ein Histogramm der Radioaktivitätsverteilung auf der Probenplatte 100 gewonnen werden, wie dies in Figur 6 schematisch dargestellt ist und auf dem Display 161 skizziert ist, das die Information der Auswerteeinheit 160 optisch darstellt.

Zur Erläuterung der Besonderheiten bei der erfindungsgemäßen Auswertung soll das Arbeitsprinzip des in Figur 1 dargestellten zweidimensionalen ortsempfindlichen Proportionalzählrohres noch kurz dargestellt werden (Einzelheiten hierzu können der schon erwähnten DE 37 35 296 A1 entnommen werden):
Die Drähte der Ausleseebenen Dₓ und D_{y} koppeln die induzierten Zählimpulse in die Verzögerungsleitungen 140,150 ein, wo jeder Impuls vom Ort der Einkoppelung in der Verzögerungsleitung auf beide Enden dieser Verzögerungsleitung zuläuft. An beiden Enden befinden sich schnelle Verstärker (in der Auswerteeinheit 160), und es wird jeweils die Zeitdifferenz zwischen dem Eintreffen der Impulse von beiden Enden der Verzögerungsleitung gemessen. Durch eine zusätzliche konstante Verzögerung auf der einen Seite der Verzögerungsleitung wird erreicht, daß der zu analysierende Zeitbereich zwischen Null und der zweifachen Gesamtverzögerung der Verzögerungsleitung liegt, z.B. 0 bis 800 ns. Dieser Zeitbereich kann durch einen Zeit-zu-Zeit-Digitalkonverter (TDC) direkt digitalisiert werden, oder er wird zunächst in einen Analogwert verwandelt und anschließend mit einem Impuls-Analog zu -Digitalkonverter (ADC) digitalisiert.

Bei einem Meßsystem von 20 x 20 cm Meßfläche (Probenplatte 100) sind etwa 1000 Kanäle des ADC oder TDC in X- und Y-Richtung ausreichend, wobei jeder Kanal dann linear 0,2 mm entspricht und man so für die gesamte Fläche 10⁶ Bildpunkte (Pixel ) von 0,04 mm² erhält.

Der Bildaufbau erfolgt dann üblicherweise in der Art, daß im Rechner der Auswerteeinheit 160 die Zählimpulse addiert werden, bis am Ende der Messung die Intensitätsverteilung Zₙₘ zur Verfügung steht, wie dies in Figur 6 dargestellt ist.

Die Ausleseebene Dₓ (Auslesedrähte 132 mit Verzögerungsleitung 140) haben bei der Verwendung eines zweidimensionalen ortsempfindlichen Proportionalzählrohres innerhalb der erfindungsgemäßen Vorrichtung die bekannte Funktion, d.h. Dimensionierung und qualitative Beschaffenheit dieser Komponenten und der damit verbundenen Elektronikkomponenten bestimmen die Ortsauflösung in X-Richtung, also in Richtung der Schlitze 111 der Parallelschlitzblende 110. In der Praxis hat sich gezeigt, daß hier Ortsauflösungen im Bereich von etwa 2 mm (beispielsweise für 32P) bei den einleitend genannten Anwendungen ausreichen, was ohne zusätzliche Bauteile wie Kollimatoren oder ähnliches erreichbar ist.

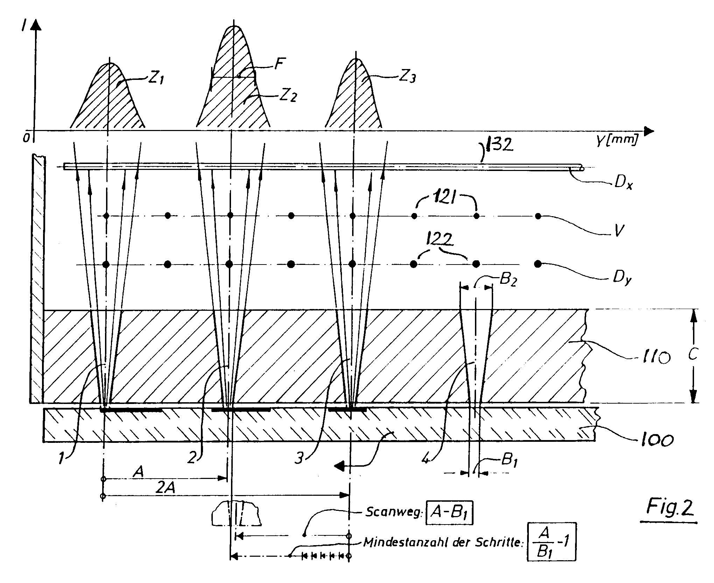

Hinsichtlich der Ausleseebene D_{y} mit zugeordneter Verzögerungsleitung 150 ergeben sich jedoch einige Unterschiede, die anhand der Figur 2 näher erläutert werden sollen (bei der Darstellung der Figur 2 ist die Ausleseebene D_{y} unterhalb der Ausleseebene Dₓ angeordnet, im Unterschied zur Darstellung der Figur 1):
In Figur 2 ist dargestellt, daß jedem der mit durchgehenden Zahlen 1,2,3,4... bezeichneten Schlitze 111 einer der Drähte 122 der Ausleseebene D_{y} zugeordnet ist, ebenso jeweils ein Draht 121 der Anodendrahtebene V. Da die Ortsauflösung in Y-Richtung nunmehr nicht durch die Eigenschaften dieser Komponenten bestimmt wird, sondern durch die Breite B₁ der Schlitze 111, dienen die Drähte 122 der Ausleseebene D_{y} auch nicht mehr zur Bestimmung einer bestimmten Y-Position auf der Probenplatte 100, sondern "nur" zur Bestimmung des ihnen jeweils zugeordneten Schlitzes 111. Dies bedeutet, daß bei der Auswertung dieser Schlitzinformation durch die Verzögerungsleitung 150 bzw. in der nachfolgenden Auswerteelektronik der Auswerteeinheit 160 insgesamt N (entsprechend der Anzahl der Schlitze 111) Integrationsfenster in Y-Richtung definiert werden können, die die Gesamtstrahlung erfassen, die einer bestimmten, unmittelbar unterhalb des Schlitzes liegenden Teilfläche der Probenplatte 100 mit einer Breite B₁ entspricht. Es können daher alle Zählimpulse "gesammelt" werden, die eindeutig jeweils einem Schlitz zuordenbar sind. In diesem Zusammenhang ist vorgesehen (Figur 2), daß die Schlitze 111 sich nach oben erweitern, in ungefährer Anpassung an einen zu erwartenden Teil-Raumwinkel der von der Probenplatte 100 ausgehenden Strahlung. Durch beide Maßnahmen zusammen ergeben sich dann bei der Auswertung Impulsratenverläufe, wie sie in Figur 2 oben an drei Beispielen dargestellt sind. Sofern man also die Integrationsfenster in Y-Richtung derart wählt, daß Überlappungen zwischen Impulsen, die benachbarten Schlitzen zugeordnet sind, ausgeschlossen sind, wird durch die Betrachtung dieses Raumwinkels folglich ein relativ großer Anteil der austretenden Strahlung erfaßt und das gesamte in Figur 2 oben dargestellte jeweilige Spektrum kann einem definierten Schlitz zugeordnet werden. Dies erhöht beträchtlich die Nachweisempfindlichkeit des Gerätes.

Eine Auflösung des Proportionalzählrohres in Y-Richtung von ebenfalls ca. 2 mm reicht daher vollkommen aus, da, wie oben schon erwähnt, die Ortsauflösung in Y-Richtung ausschließlich durch die Breite B₁ der Schlitze 111 definiert ist.

Bei der bevorzugten Anwendung der erfindungsgemäßen Vorrichtung haben diese begrenzten Anforderungen an die innere Auflösung des Meßsystems sowohl in X- als auch in Y-Richtung den weiteren Vorteil, daß das Meßsystem, d.h. beim Ausführungsbeispiel der Figur 1, die Ausleseebenen Dₓ und D_{y}, die daran gekoppelten Verzögerungsleitungen 140 und 150 und die nachgeschalteten Elektronikeinheiten relativ einfach aufgebaut sein können, da Nichtlinearitäten und störende Effekte, die mit hohem mechanischen und elektronischem Aufwand kompensiert werden müssen, in diesem Auflösungsbereich nicht oder nur gering ins Gewicht fallen. Es können also sowohl mechanische Toleranzen bei der Fertigung beispielsweise der Rahmen und der Verzögerungsleitungen großzügiger bemessen werden, als auch die Kanalzahl des für die Y-Richtung "zuständigen" ADC bzw. TDC kann erheblich reduziert werden, nämlich auf die Anzahl N der Schlitze 111.

Auf sonstige Kunstgriffe zur Erhöhung der Ortsauflösung bei derartigen Zählrohren, wie z.B. elektronischer Kollimator (DE 3050 716 C2) oder Dampfzusätze zum Zählgas kann verzichtet werden.

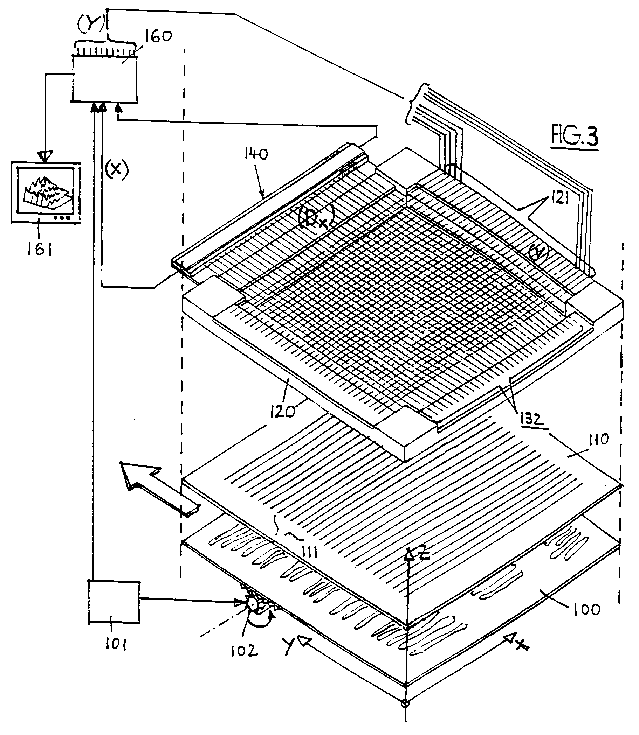

Die oben erwähnten bedingten Anforderungen an die Ortsauflösung des Meßsystems in Y-Richtung (Scan-Richtung) ermöglichen den Einsatz eines modifizierten Meßsystems, wie es in Figur 3 dargestellt ist: Jedem der Schlitze 111 ist ein parallel gespannter Zähldraht 121 der Anodendrahtebene V zugeordnet, also N Anodendrähte 121 entsprechend der Anzahl N von Schlitzen 111, senkrecht dazu verläuft (wie in Figur 1) die Ausleseebene Dₓ der Auslesedrähte 132 mit zugeordneter Verzögerungsleitung 140 zur ortsempfindlichen Messung der x-Koordinate jedes Ereignisses. Dieses Meßsystem ist insofern ein Hybrid aus Vielfachzähler und ortsabhängigem Zähler, als es in X-Richtung als ortsabhängiges Zählrohr, in Y-Richtung als N-fach Zähler arbeitet. Bei dieser Variante kann die D_{y}-Ausleseebene mit zugehöriger Verzögerungsleitung eingespart werden, da zur Identifizierung der Schlitze das betreffende Signal der zugeordneten Anodendrähte 121 direkt ausgekoppelt und der Auswerteeinheit 160 zugeführt wird, wo natürlich auch die entsprechenden Elektronikbauteile zur Auswertung des Signals der Verzögerungsleitung 150 (Figur 1) entfallen können. Eventuell nachteilig bei diesem Ausführungsbeispiel ist die direkte Ankoppelung der Anodendraht-Hochspannung an die Auswerteeinheit 160, was in der Regel zusätzliche schaltungstechnische Maßnahmen erforderlich macht. Ein Vorteil ist demgegenüber darin zu sehen, daß das Meßsystem höhere Ereignisraten auflösen kann und bezüglich der Auslesung in einer Plateau-Region der Zählrohrcharakteristik, also sehr stabil, arbeiten kann.

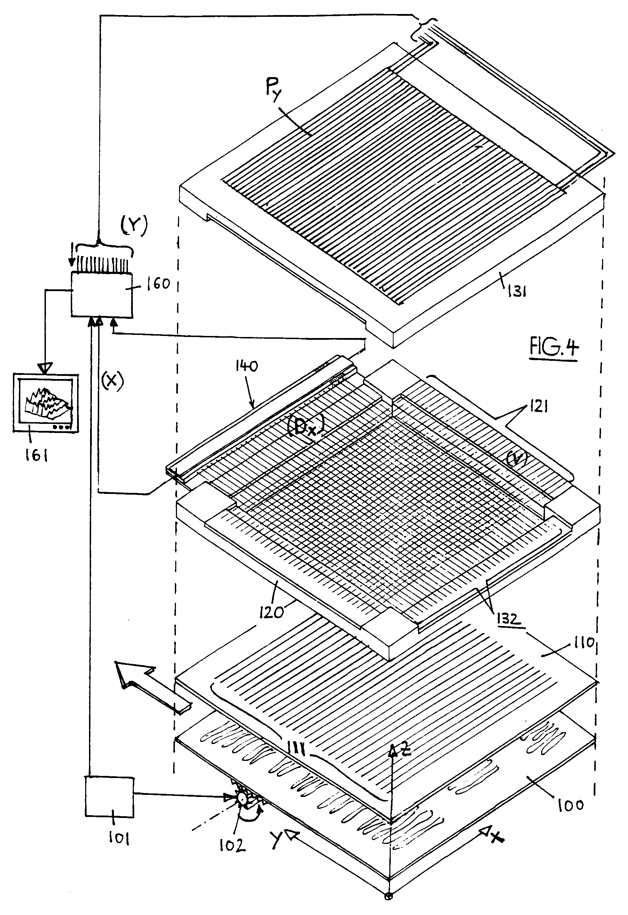

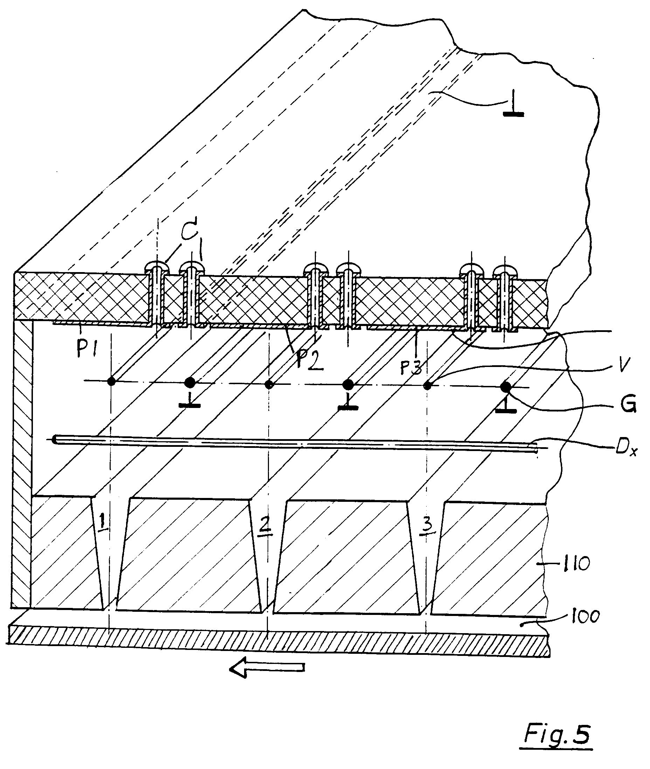

Eine weitere Ausgestaltung, bei der dieser Vorteil erhalten bleibt, ohne daß die mit der direkten Anodendrahtauslesung verbundenen Schwierigkeiten auftreten, ist in den Figuren 4 und 5 dargestellt:
Jedem der Schlitze 1,2,3... ist ein Auslese-Pad P1,P2,P3... zugeordnet, die eine Padebene P_{y} bilden und oberhalb der Ausleseebene Dₓ angeordnet sind (aus Gründen der deutlicheren Darstellung ist die Padebene P_{y} in Figur 4 auf der Oberseite des Rahmens 131 dargestellt, wie aus Figur 5 ersichtlich, befinden sich diese Pads jedoch auf der Innenseite der Zählkammer).

Ein solches Auslesepad besteht im wesentlichen aus einer metallisch leitenden, der Probenplatte und den Anodendrähten zugewandten Unterseite als Kathodenfläche und einer darüberliegenden, zur hinteren Zählrohrwandung zeigenden, isolierenden Trägerplatte; beispielsweise kann dieser Aufbau mit Hilfe der Leiterplattentechnik realisiert werden. Anschlußkontakte C stellen eine leitende Verbindung zwischen der Unterseite eines Auslesepads und der Oberseite des Zählrohrgehäuses her, von wo dann die im Auslesepad induzierten Zählimpulse geeigneten Auswerteschaltungen zugeleitet werden.

Jedes dieser Auslese-Pads hat somit die gleiche Funktion wie ein Anoden Auslesedraht 121 des Ausführungsbeispiels der Figur 3, nämlich die Identifizierung des ihm zugeordneten Schlitzes, was hier dadurch bewirkt wird, daß von den Anodendrähten 121 Impulse auf den jedem Anodendraht 120 und damit jedem Schlitz zugeordneten Auslese-Pad P1... induziert werden. Zur Vermeidung von Übersprecheffekten sind die einzelnen Auslese-Pads P1,P2... durch geerdete Streifen (Gardstrips) getrennt, was in Figur 5 durch das Erdungssymbol dargestellt ist.

Ebenfalls zur Verbesserung der Ausleseeigenschaften befindet sich in gleicher Ebene mit der Anodendrahtebene V ein geerdetes Drahtgitter G. Die Auslese-Pads P1... der Padebene P_{y} sind ebenfalls einzeln mit der Auswerteeinheit 160 verbunden und insofern stellt auch das Meßsystem der Figur 4 ein Hybrid aus Vielfachzähler (Padebene P_{y}) und ortsabhängigem Zählrohr (Ausleseebene Dₓ mit Verzögerungsleitung 140) dar.

Ein besonderer Vorteil der Ausführung des Meßsystems mit der Padebene P_{y} besteht darin, daß diese Pads und zum großen Teil auch diesen zugeordnete elektronische Bauteile wie Verstärker mit Hilfe der Leiterplattentechnik ausgeführt werden können, beispielsweise als mehrlagige Leiterplatten, so daß bei Bedarf ein Teil der benötigten elektronischen Schaltungen beim Zählrohr selbst oder unmittelbar auf dem Zählrohrgehäuse untergebracht werden kann.

Je nach Einsatzzweck und gewünschter Ortsauflösung kann als Meßsystem eines der in den Figuren 1 und 2,3 oder 4 und 5 dargestellten Systeme Verwendung finden, wobei aus Gründen der Übersichtlichkeit die eigentlichen Zählrohrbauteile (Zählkammer und Peripherie) nicht dargestellt wurden.

Grundsätzlich ist auch die Verwendung einer weiteren Variante möglich (aus Gründen der Übersichtlichkeit zeichnerisch nicht dargestellt), bei der das Meßsystem aus N in X-Richtung parallelen eindimensional ortsempfindlichen Proportionalzählrohre mit Verzögerungsleitung und zugeordnetem Anodendraht über jeweils einem Schlitz der Parallelschlitzblende 110 gebildet wird, um N in X-Richtung unabhängig voneinander arbeitende ortsempfindliche Messungen durchzuführen. Grundsätzlich wäre dies eine Parallelanordnung von N Proportionalzählrohren, wie sie in der DE 30 02 950 C2 dargestellt sind.

Unabhängig von der Auswahl der oben geschilderten Meßsysteme ist das grundsätzliche Verfahren, nach dem die Erfindung arbeitet, identisch, nämlich entsprechend dem in Figur 2 und Figur 6 dargestellten Schema:

Unterstellen wir, daß mit der Anordnung in Figur 2 eine erste Teilmessung durchgeführt wird, d.h., die Radioaktivität von N Teilflächen der Probenplatte 100 mit der Breite B₁ wird in X-Richtung ortsabhängig gemessen und es ergibt sich folglich die in Figur 6 oben unter "Messung 1" dargestellte Verteilung Zₙₘ, wobei n die Nummer des Schlitzes und m die Nummer der Messung darstellt. Nach Ablauf der für diese erste Teilmessung vorgesehenen Zeitdauer wird die Probenplatte 100 durch Betätigung der Antriebseinheit 102 (Figur 1) um einen Scan-Schritt
weiterbewegt, so daß dann während der zweiten Teilmessung die Radioaktivitätsverteilung der benachbarten Teilflächen der Probenplatte 100 während der Meßdauer gewonnen wird, was dann zu dem in der Mitte der Figur 6 dargestellten Diagramm führt.

Nach Durchführung sämtlicher Teilmessungen, d.h. nach mindestens A/B₁-1 Scan-Schritten (A ist der Abstand der Schlitze 1,2,3,4...), ist dann die Probenplatte 100 vollständig abgetastet und auf dem Display 161 ist dann ein vollständiges Histogramm aufgebaut, wie es im Ausschnitt im unteren Teil der Figur 6 dargestellt ist.

Bei einem praktischen Beispiel stellt sich eine solche Auswertung wie folgt dar:
Bei einer Anzahl N = 99 von Schlitzen 111 einem Abstand A der Schlitze untereinander von 4 mm und einer unteren Schlitzbreite B₁ von 0,2 mm und einer Schrittweite von 0,1 mm werden 39 Teil messungen durchgeführt.

Zur Abspeicherung der Ortsinformation in X-Richtung sei ein Raster (Kanalanzahl) von 512 Schritten vorgesehen (R im oberen Teil der Figur 6). Jeder Bildpunkt (Pixel) hat folglich die Fläche BxR.

Es stehen somit insgesamt 99 x 39 x 512 Bildpunkte zur Verfügung zur Darstellung der Radioaktivitätsverteilung der Probenplatte 100. Jedem dieser Bildpunkte entspricht ein Auswertekanal der Auswerteeinheit 160, in dem die zugehörigen Ereignisse registriert und aufsummiert werden und somit das Histogramm aufgebaut wird.

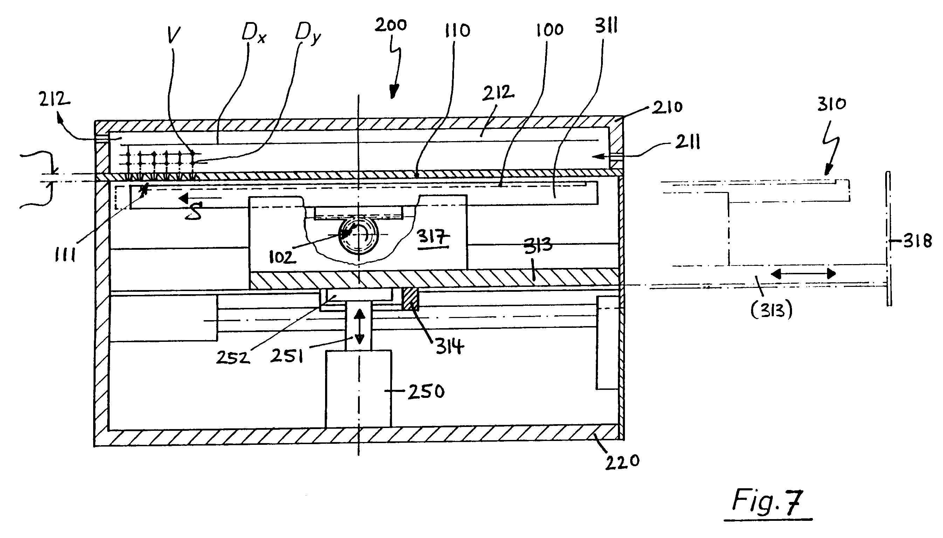

Figur 7 zeigt schließlich noch den Gesamtaufbau der erfindungsgemäßen Vorrichtung, der abschließend noch kurz erläutert werden soll, im wesentlichen entspricht der Aufbau des dort gezeigten Gerätes dem Aufbau des Gerätes nach der DE 37 44 808 C2, so daß hier nur Grundzüge erläutert werden sollen:
Die Figur 7 zeigt eine Schnittdarstellung durch ein vollständiges Meßsystem, in dem die unter Figur 1 beschriebene, aus den beiden Rahmen 120,130 aufgebaute Zählkammer untergebracht ist, was durch die Ausleseebenen Dₓ,D_{y} und die Anodendrahtebene V schematisch angedeutet ist.

Das Meßsystem besteht aus einem Gehäuse 200, das seinerseits zweiteilig aufgebaut ist, nämlich aus einem Oberteil 210 und einem Unterteil 220, wobei Oberteil 210 und Unterteil 220 über ein Gelenk klappbar oder schwenkbar miteinander verbunden sein können.

Das Oberteil 210 dient zur Aufnahme der Zählkammer 212. Den Boden der Zählkammer 212 und das Oberteil 210 bildet die Parallelschlitzblende 110 mit den teilweise dargestellten Schlitzen 111. Die Halterung und Positionierung der Rahmen 120,130 in der Zählkammer entspricht im wesentlichen den in der DE 37 44 808 C2 beschriebenen Maßnahmen.

Gaseinlaß- und -auslaßöffnungen 211,212 dienen zum Betrieb des Zählrohres als Durchflußzählrohr.

Während das Oberteil 210 des Gehäuses 200 im wesentlichen zur Aufnahme der Zählkammer 212 und gegebenenfalls eines Aufsatzes (nicht dargestellt) für die Auswerteelektronik dient, ist das Unterteil 220 zur Aufnahme der Einrichtungen zur Verschiebung der Probenplatte 100 ausgestaltet, sowie zum Austausch von Probenplatten, wie dies im folgenden erläutert wird:
An inneren Seitenwandungen sind horizontale Teleskopschienen gehalten, an deren Innenseite Winkelprofile befestigt sind. Die horizontalen Flächen der Winkelprofile dienen zur Aufnahme einer Grundplatte 313, die dort lösbar aufsitzt, wobei die vertikalen Flächen der Winkelprofile gleichzeitig als vertikale Führung der Grundplatte 313 dienen.

Ein (in der Zeichnung nicht dargestellter) Motor kann über einen Zahnstangentrieb die Teleskopschienen antreiben, so daß folglich die Grundplatte 313 horizontal aus dem Unterteil 220 herausfahrbar ist, wie dies in Figur 7 strichpunktiert angedeutet ist.

Auf der Grundplatte 313 befindet sich ein Aufnahmeblock 317 für das Antriebsritzel 102, auf dem eine Trägerplatte 311 horizontal in Scan-Richtung S geführt sitzt, auf der eine auszumessende Probenplatte 100 abgelegt werden kann.

An der Vorderseite der Grundplatte 313 ist eine Frontplatte 318 angebracht, die im eingeschobenen Zustand die Öffnung im Unterteil 220 des Gehäuses 200 abdeckt.

Die Grundplatte 313 und die übrigen oben beschriebenen Bauteile bilden somit einen Wechselschlitten 310, mit dem eine auszumessende Probe 100 von außerhalb des Gehäuses 200 in den Bereich unterhalb der Zählkammer 212 schubladenähnlich verfahren werden kann.

An der Unterseite der Grundplatte 313 befindet sich ein taschenähnlicher Ansatz 314, dessen zur Einschuböffnung gegenüberliegende Seite offen ist.

Auf dem Boden des Unterteils 220 ist ein Antriebsaggregat 250 mit einem Kolben 251 etwa mittig unterhalb der Zählkammer 212 gelagert. Der Kolben 251 ist nach oben in Richtung zur Zählkammer 212 hydraulisch, pneumatisch oder elektrisch verschiebbar. Das obere Ende des Kolbens 251 ist als stempelähnlicher Aufsatz 252 ausgebildet, der im eingefahrenen Zustand des Kolbens 251 auf gleicher Höhe liegt, wie die Eingangsöffnung des Ansatzes 314 unterhalb der Grundplatte 313, so daß beim Einschieben des Wechselschlittens 310 der Aufsatz 252 in den Ansatz 314 gleitet.

Sobald diese Arbeitsposition erreicht ist, kann das Antriebsaggregat 250 den Kolben 251 nach oben schieben, bis die Trägerplatte 311 die zu messende Probenplatte 100 an die Unterseite der Parallelschlitzblende 110 drückt. In dieser Position kann dann die erste Teilmessung beginnen. Nach der ersten Teilmessung fährt der Kolben 251 wieder nach unten, und die Antriebseinheit 102 (wie schematisch in Figur 1 dargestellt) verschiebt die Trägerplatte 311 mit der Probenplatte 100 um den einem Scan-Schritt entsprechenden Weg in Richtung des Pfeils S. Darauf fährt die Trägerplatte wieder nach oben und die zweite Teilmessung kann durchgeführt werden; dieser Zyklus wiederholt sich dann, bis alle Teilmessungen durchgeführt sind.

## Patentansprüche

1. Verfahren zur ortsempfindlichen Messung der Radioaktivitätsverteilung auf einer flächigen Probe mit einer zwischen einem Detektor und der Probe angeordneten Blendenplatte, wobei bei jeweils einem Verfahrensschritt die Strahlung einer Gruppe von Teilflächen der Probe entsprechend der Form der Blendenöffnungen erfaßt und abgespeichert wird, danach eine Relativverschiebung zwischen Proben und Detektor durchgeführt wird, um die Strahlung einer anderen Gruppe von Teilflächen zu erfassen und somit die Gesamtmessung der Probe aus mehreren solcher, sukzessive durchgeführten Teilmessungen besteht, aus denen die gesamte Radioaktivitätsverteilung zusammengesetzt wird,
dadurch gekennzeichnet, daß als Blendenplatte eine Parallelschlitzblende mit einer Vielzahl von Schlitzen verwendet wird, die sich im wesentlichen durchgehend über die gesamte Breite der Blendenplatte erstrecken, daß jede Teilmessung die gleichzeitige, ortsempfindliche Messung aller streifenartigen Teilflächen der Probe in Richtung (x) der Schlitze umfaßt, und daß die Relativverschiebungen zwischen Probe und Detektor zwischen aufeinanderfolgenden Teilmessungen ausschließlich in der Richtung (y) senkrecht zu der Richtung (x) der Schlitze erfolgen.

2. Vorrichtung zur Durchführung des Verfahrens nach Anspruch 1, mit einer elektronischen Auwerteeinheit mit Speichereinrichtung und einer Anzeigeeinrichtung für die gemessene Intensitätsverteilung Z (x,y) der Strahlung, dadurch gekennzeichnet, daß das Meßsystem derart ausgebildet ist, daß in x-Richtung der Probe die durch die Schlitze der Parallelschlitzblende tretende Strahlung ortsempfindlich erfaßbar ist, daß die Schlitzbreite (B,B1) etwa der gewünschten Ortsauflösung in Scan-Richtung (y) entspricht, und daß Einrichtungen (101,102) vorgesehen sind, die die Probenplatte (100) und das Meßsystem bei jedem Scan-Schritt höchstens um den Wert der Schlitzbreite (B,B1) relativ zueinander schrittweise oder kontinuierlich verschieben.

3. Vorrichtung nach Anspruch 2, dadurch gekennzeichnet, daß das Meßsystem ein zweidimensionales, ortsabhängiges Proportionalzählrohr mit jeweils einer Drahtebene (Dₓ,D_{y}) für die Auslesung der x-Koordinate und der y-Koordinate und je einer zugeordneten Verzögerungsleitung (140,150) ist (Figur 1).

4. Vorrichtung nach Anspruch 3, dadurch gekennzeichnet, daß die elektronischen Schaltungen der Auswerteeinheit (160), derart ausgebildet sind, daß sie N Integrationsfenster in y-Richtung definieren, die die Gesamtstrahlung erfassen, die einer bestimmten, unmittelbar unterhalb des Schlitzes liegenden Teilfläche der Breite (B) entspricht und in dafür vorgesehene Speicherabschnitte abspeichern.

5. Vorrichtung nach Anspruch 3, dadurch gekennzeichnet, daß die Drähte (122) der Drahtebene (D_{y}) deren Drähte parallel zu den Schlitzen (111) verlaufen, zumindest teilweise genau über den Schlitzen der Parallelschlitzblende verlaufen, derart, daß der Abstand (A') der Drähte dieser Drahtebene (D_{y}) gleich dem Abstand (A) der Schlitze (111) oder ein Bruchteil davon ist.

6. Vorrichtung nach Anspruch 2, dadurch gekennzeichnet, daß das Meßsystem ein zweidimensionales ortsabhängiges Zählrohr mit einer Drahtebene (Dₓ) für die Auslesung der x-Koordinate und einer Anoden-Drahtebene (V) ist, wobei die Anodendrähte (121) genau über den N Schlitzen verlaufen, so daß die Messung der jedem Schlitz entsprechenden Gesamtzählrate Z_{N} durch Auskoppelung der Signale der N Anodendrähte (121) der Anodendrahtebene (V) erfolgen kann (Figur 3).

7. Vorrichtung nach Anspruch 6, dadurch gekennzeichnet, daß jedem Anodendraht der Anodendrahtebene (V) ein parallel verlaufender Kathodenstreifen (Pad) zugeordnet ist, dessen von Impulsen "seines" zugeordneten Anodendrahts induzierte Impulse (anstelle der Anodendrahtsignale) ausgelesen werden (Figur 4).

8. Vorrichtung nach Anspruch 2, dadurch gekennzeichnet, daß das Meßsystem aus N in x-Richtung parallelen eindimensional ortsempfindlichen Zählrohren mit Verzögerungsleitung und zugeordnetem Anodendraht über jeweils einem Schlitz der Parallelschlitzblende besteht.

9. Vorrichtung nach Anspruch 2, dadurch gekennzeichnet, daß die Schlitze (111) sich in Richtung zum Detektor-Innenraum aufweiten, insbesondere keilförmigen Querschnitt aufweisen, mit einer unteren Breite (B1) und einer oberen Breite (B2) mit B2 B1.

10. Vorrichtung nach Anspruch 2 oder 10, dadurch gekennzeichnet, daß die Schlitzbreite (B,B1) variabel ausgebildet ist, insbesondere als Funktion B=F (y).

11. Vorrichtung nach Anspruch 2, dadurch gekennzeichnet, daß die Breite (B,B1) im Bereich von 0,1 bis 1 mm, vorzugsweise bei 0,3 mm, die Breite (B,B2) im Bereich von 0,5 bis 3 mm, vorzugsweise 1 bis 2 mm und die Dicke (C) der Parallelschlitzblende 1-5 mm, vorzugsweise 2-3 mm, beträgt.

12. Vorrichtung nach Anspruch 2, dadurch gekennzeichnet, daß Meßsystem und Parallelschlitzblende (110) zu einer Baueinheit zusammengefaßt sind, derart, daß die Parallelschlitzblende (110) den unteren Abschluß der Zählkammer (212) bildet.

13. Vorrichtung nach Anspruch 1 und 12, dadurch gekennzeichnet, daß die Einrichtungen zur Erzeugung der Relativbewegung eine Antriebseinheit beinhalten, die die auszumessende Probenplatte (M) unter der Parallelschlitzblende (110) schrittweise oder kontinuierlich durchschiebt.

14. Vorrichtung nach Anspruch 6 oder 7, dadurch gekennzeichnet, daß zwischen den Zähldrähten jeweils parallel ein auf Erdpotential liegender Draht gespannt ist.
